# EUROPEAN PATENT APPLICATION

(11) **EP 3 603 932 A1**
(43) Date of publication of application: **05.02.2020**
(21) Application number: 18723055.2
(22) Date of filing: 23.03.2018
(51) Int. Cl.: B29C 47/00, B29C 47/76, B29C 47/88, B29C 47/92, B29C 47/10

(54) **FILAMENT PRODUCTION DEVICE AND METHOD**

(30) Priority: 24.03.2017 PT 2017109990
(71) Applicant: Universidade Da Beira Interior, 6201-001 Covilhã (PT)
(72) Inventor: LIMA DE AGUIAR, Martim, 3200-300 Serpins (PT); DE FIGUEIREDO DINIS OLIVEIRA GASPAR, Pedro Miguel, 6200-788 Tortosendo (PT)
(74) Representative: Ferreira, Maria Silvina
(86) International application number: PCT/IB2018/051989
(87) International publication number: WO 2018/172993

(57) **Abstract**

The present invention refers to a device that recycles thermoplastics for producing a filament for fused deposition modelling devices (FDM) and respective operating method.

The crushed thermoplastic is introduced into the hopper (4), pushed by a screw, driven by the motor (1), inside the barrel (5), whose axial force is sustained by the axial bearing (2). The thermoplastic is melted with the assistance of electrical heating resistors (6) and passes through a degassing zone (7) connected to the vacuum pump (3). The thermoplastic is forced through the die (8), being cooled on a cooling tray (9) having a water circulation system (12). The diameter of the filament is controlled by the puller (11) based on the data obtained in the measurement system of the filament diameter (10). A microcontroller controls the entire process.

## Description

### Field of the Art

The present application describes a device capable of producing a thermoplastic filament, using as raw material flakes (small pieces) of thermoplastic obtained from packaging or other discarded thermoplastic residues. The filament produced by the device described herein serves for use as raw material in modelling devices by fused deposition modelling (FDM).

### Background

FDM technology resorts to the use of the additive manufacturing method, layer by layer, for producing three-dimensional objects based on a computer-aided design model. Nowadays, this technology is already broadly used in design processes and prototyping, enabling simplified manufacture of parts and a reduction in the number of processes and tools for the construction thereof. At a domestic level, although not commonly used by the public at large, it is forecasted that gradually more and more homes will have one of these devices.

Most FDM equipment uses a filament of a certain thermoplastic as raw material, the most used being polylactic acid and acrylonitrile-butadiene-styrene, although polyethylene terephthalate, polyethylene terephthalate modified with glycol, nylon and polyamide, among others, can also be used.

These types of filament are largely produced in an industrial environment, where large extrusion lines produce filament on an industrial scale. However, some extruders have already been designed for the extrusion of filament in a domestic environment, such as Lyman, or Filastruder which essentially focus on extrusion from thermoplastic pellets, and which calibrate the filament with the diameter of the die. Additionally, known solutions have a rather slow production process, and require the pellets to be stored under reduced humidity conditions.

Document US 2016/0107337 A1 describes a method of obtaining raw material from the recycling of industrial residues for subsequent use in 3D printers, presenting as essential characteristic the crystallization of the thermoplastic after producing the filament to improve the print quality of the object. However, the document in question does not refer to the way of processing the diameter control of said filament or the humidity control during the extrusion process.

Document US 2016/0167254 A1 describes a method of obtaining filament that can be used in FDM devices, from the recycling of thermoplastic materials, presenting as essential characteristic the method of extrusion by piston and control of the diameter of the filament by continuous moulding. However, the filament obtained by continuous moulding presents the marks of the moulds which, if not removed, may interfere with the correct operation of the FDM machine for which the filament is produced, and result in clogging thereof. Additionally, since it consists of a continuous extrusion method, the diameter of the filament produced cannot be modified by changing only the operating parameters of the device, but requires a change of the entire mould that makes up the continuous moulding system.

Document US 2015/0209978 A1 describes a method of obtaining a filament for use in FDM devices from the recycling of thermoplastics, capable of operating in inhospitable environments, such as at sea or in space. This document merely mentions the use of one temperature along the entire process, and the diameter control of the filament is made based on a cooled die, the filament being subsequently calibrated by traction.

Document US 2015/0144284A1 A1 describes a method of producing metal parts in gravity-free environments, presenting as essential characteristic the use of a mould produced with the assistance of FDM technology for subsequent production of a part by injection.

Document US 05407624 A refers to a method of obtaining raw material from recycling of thermoplastics, presenting as essential characteristic the simplified processing of thermoplastic residues for producing pellets, in industrial quantities.

Document US 2016/0271880 A1 refers to a water cooling method used in FDM machines to avoid clogging when using thermoplastics with high melting points, presenting as essential characteristic the use of a water cooling system in the head, preventing the filament fed into the machine from exceeding temperatures that significantly alter its plasticity before desired, resulting in the clogging of the machine.

### Summary

The present application describes a device for producing a filament, comprising:
- a screw, driven by a motor, said screw of at least two phases comprising, in a first phase, a feeding zone where the thermoplastic material is fed, a compression zone and a metering zone; and in a second phase, a decompression zone, a degassing zone, a compression zone and a metering zone;
- said screw comprising a barrel along its length;
- a die, placed at the end of the screw opposite to the feeding zone;
Characterized in that comprises:
- at least one electrical heating resistor installed in each of said phases of the screw;
- a degassing system comprising a vacuum pump connected to the barrel, in the degassing zone of the screw, causing a decrease in pressure;
- a cooling unit;
- a filament diameter control unit, comprising a diameter measuring mechanism, a puller and respective motor;
- a microcontroller configured to control:
   i. the operating cycle of the electrical heating resistors, by processing the data sent by at least one temperature sensor installed next to each of the electrical heating resistors;
   ii. the motor for driving the screw; and
   iii. controlling the operating motor speed of the puller of the diameter control unit, by processing the data sent by the diameter measuring mechanism.

In a particular embodiment of the device, a cooling unit comprises a cooling tray and a water circulation system.

In another particular embodiment of the device, the diameter measuring mechanism is a digital calliper.

In another particular embodiment of the device, the diameter measuring mechanism is of a laser type.

In yet another particular embodiment of the device, the diameter control unit additionally comprises at least two rolls, disposed vertically, which are pressed against each other by an elastic placed on plastic bearings of the upper roll, and the movement of the rolls is controlled by the motor that acts on the lower roll.

In another particular embodiment of the device, the microcontroller controls the operating cycle of the electrical heating resistors by Proportional-Integral-Derivative closed-loop control algorithm.

In another particular embodiment of the device, the microcontroller controls the motor operation by pulse-width modulation.

In another particular embodiment of the device, the barrel is finned at the feeding zone of the screw.

The present application also describes the operating method of the device for producing filament, comprising the following steps:
a) microcontroller receives and processes the temperature data originating from the temperature sensors installed next to each of the electrical heating resistors (6), actuating until the temperature steady state of said zones is achieved;
b) microcontroller drives the motor (1) of the screw (13) which promotes the rotation of the screw (13) compressing and pushing the flakes of thermoplastic material at the feeding zone of the screw (13) along the barrel (5) heated by the electrical heating resistors (6), resulting in the melting of the thermoplastic;
c) melted thermoplastic material arrives at the degassing zone, where the decrease in pressure caused by the arrangement of the screw (13) and by the vacuum plug (7) that connects the barrel (5) to the vacuum pump (3) causes the thermoplastic to bubble and consequently release volatile gases;
d) the thermoplastic is compressed against the die (8) traversing the orifice thereof;
e) in the shape of filament but still in fused state, the thermoplastic traverses the cooling unit passing through the cooling tray (9) which upon forcing the filament to come into contact with water due to the water circulation system (12), makes it return to solid state;
f) filament in solid state is pulled by the rollers (16) of the puller (11) of the diameter control unit;
g) calibration of the filament diameter, by the diameter measuring mechanism (10), which sends this data to the microcontroller;
h) the microcontroller processes the data sent by the diameter control unit and varies the motor (15) speed of the puller (11) to calibrate the filament diameter, increasing the motor speed (15) of the puller (11) to decrease the diameter of the filament, or lowering the motor speed (15) of the puller (11) to increase the diameter.

### General description

The present application describes a device for recycling thermoplastics, producing a filament for use in fused deposition modelling devices - normally called 3D printers. Equally described is the respective operating method of the device that leads to the production of said filament, starting with the conversion of flakes (small pieces) of thermoplastic, obtained from crushed post-consumed thermoplastic residues.

The filament is produced in the developed device by a process of thermoplastic extrusion, which is fed in the form of flakes, melted, extruded and calibrated during cooling thereof.

Therefore, the technology now developed enables the entire filament production process to be more independent, as the user only needs to place the flakes of thermoplastic into a hopper and place the tip of the extruded filament on the puller. Thereafter, the device operates independently and is capable of controlling and monitoring the entire filament production process, namely the temperature values, obtained based on temperature sensors placed next to each electrical heating resistor, and filament diameter, through the values obtained by the diameter measuring mechanism. Additionally, the device is capable of calibrating the filament autonomously, and the existence of a vacuum degassing system means there is no need to for a pre-dry procedure for the plastic that feeds the device, simplifying the process.

The entire operation of the device now proposed is controlled by action of a microcontroller. The crushed thermoplastic is introduced into the hopper, being pushed by a screw, driven by a motor, within a barrel whose axial force is supported by an axial bearing. The thermoplastic is melted with the assistance of electrical heating resistors and traverses a degassing zone connected to a vacuum pump. The thermoplastic is then forced to go through a die, being cooled by a cooling unit, based on a cooling tray fed by a water circulation system.

The diameter of the filament is controlled by a diameter control unit, which comprises a puller and a diameter measuring mechanism. Based on the filament diameter values collected by the mechanism, the microcontroller drives the puller such that it pulls the filament faster (decreasing the diameter) or slower (increasing the diameter), so as to obtain the desired filament diameter.

The device developed begins by melting the thermoplastic, with the assistance of the electrical heating resistors, followed by degassing, with the assistance of a vacuum pump, a process that by removing the gases released during fusion of the plastic, namely water vapour, avoids the need for pre-drying of the material fed. The melted thermoplastic is pushed against the die and comes out through an orifice located at its end, then on to the cooling unit where the thermoplastic, already in filament form, is cooled and stretched until it has the desired diameter, while it solidifies. A reservoir can be added to the cooling unit having a greater mass of water, or another cooling mechanism, so that when the device has long operating periods, the temperature of the water does not vary and, consequently, compromise the process. If the situation does not allow for the use of water-cooling, another type of cooling may be used, such as, for example, air cooling. Lastly, the puller of the diameter control unit pulls the filament at a certain speed so that it arrives at the end of the process within the tolerance required by an FDM device. The diameter may be measured with a digital calliper to read the measurement of the diameter of the filament on the line, but other methods may be used such as laser measurement.

The screw should be designed for general use if the objective is to extrude more than one thermoplastic, or may also be designed for a specific thermoplastic, if only one type of thermoplastic is to be extruded. The general use screw sacrifices some degree of efficiency in detriment to universality. In any case, the screw comprises at least two phases. The first phase is where the thermoplastic is fed, melted and compressed; in the second phase the thermoplastic is decompressed to be degassed and again compressed so that there is sufficient pressure to push it through the die orifice. In short, the screw is comprised by the first phase (with feeding zone - where the thermoplastic is introduced -, compression zone - where the thermoplastic is melted and compressed - and metering zone - where the compressed thermoplastic accumulates pressure -) and by the second phase (with decompression zone - the thermoplastic is decompressed resulting in bubbling and facilitating the release of contaminating volatile gases - , degassing zone - placing the melted thermoplastic under vacuum increasing the release and removal of volatile contaminants -, compression zone and metering zone) . The zones are characterized by having different channel depths, the feeding and degassing zones having the deepest channel, the metering zones having a shallower channel and the remaining zones gradually vary the depth of the channel to join the bordering zones. Each of the zones has an ideal operating temperature, and this is why they must be heated according to the requirements of the thermoplastic. Accordingly, different heating zones are necessary. In the first compression zone (compression zone of the first phase) a barrier screw may be used, which is capable of separating the thermoplastic in solid state from what is already melted, compressing the still-solid thermoplastic against the barrel, whereby increasing the efficiency of the melting process. The physical arrangement of the screw may not be limited to this description, and the barrier zone may be discarded, and even a constant channel screw may be used.

The present technology is useful for producing consumer goods from thermoplastic residues, which may be crushed again, forming flakes. These flakes are introduced into the device now developed and again form a filament that can be used in FDM devices to produce other consumer goods, whereby conferring a certain level of self-sufficiency and independence to the user, equally acting as a recycling incentive, since it is the user who directly benefits from the recycling result.

Accordingly, the device developed was devised to be applied, preferably, in a home, office or small business environment, but can also be applied in other scenarios, such as industry and education.

### Description of the Drawings

For improved comprehension of the present application, the accompanying drawings represent preferred embodiments, but are not intended to limit the art disclosed herein.

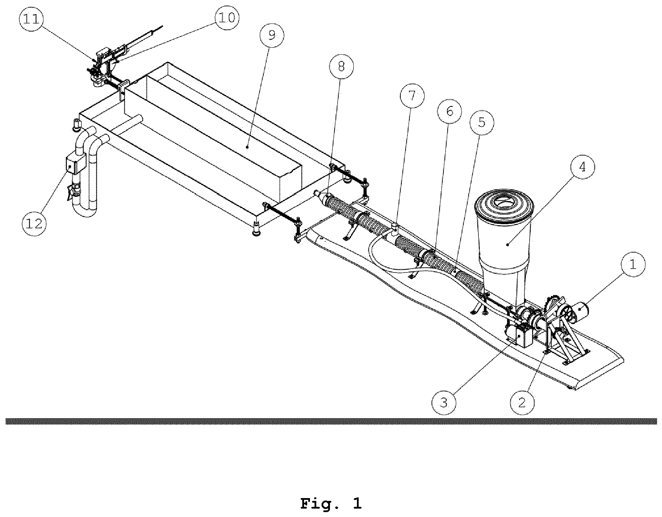

**Figure 1****:** Schematic representation of a perspective view of the device developed, wherein (1) represents the motor that drives the screw; (2) represents the axial bearing; (3) represents the vacuum pump; (4) represents the hopper; (5) represents the barrel; (6) represents electrical heating resistors; (7) represents the vacuum plug of the degassing zone; (8) represents the die; (9) represents the cooling tray; (10) represents the filament diameter measuring mechanism; (11) represents the puller; (12) represents the water circulation system.

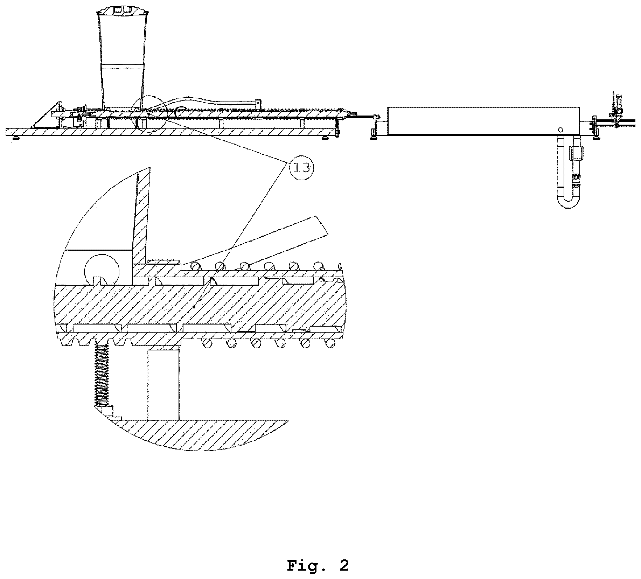

**Figure 2****:** Schematic cut-off representation of the device developed, wherein (13) represents the screw.

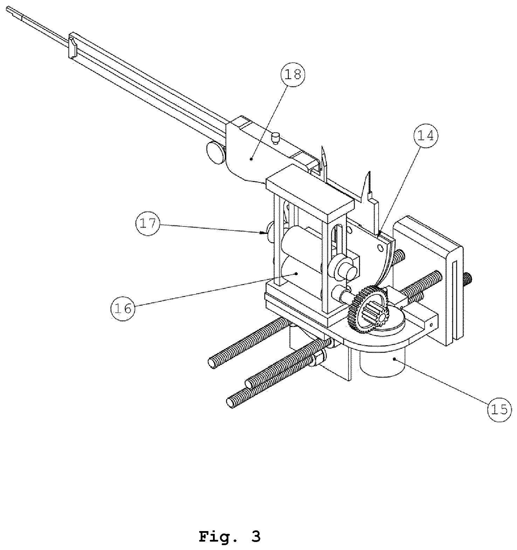

**Figure 3****:** Schematic representation of the filament diameter control unit wherein (14) represents the coupling with rollers pulling the filament trough the calliper measuring zone; (15) represents the motor of the puller; (16) represents the traction rollers; (17) represents the plastic bearings; (18) represents the calliper.

### Description of embodiments

Referring to the drawings, some embodiments are now described in further detail, but are not designed to limit the scope of the present application.

The present application describes a device for producing a filament usable in FDM devices, from crushed thermoplastic residues, and respective operating method of the device, leading to filament production.

The device pertains to an extruder of thermoplastics, whose screw is designed so as to obey the characteristics of the thermoplastics to be extruded. The device operates after stabilization of the different temperatures in the respective zones of the device, enabling the achievement of an ideal temperature profile for extrusion of the thermoplastic and which is in accordance with that programmed in the microcontroller. These temperatures are achieved and maintained based on the Proportional-Integral-Derivative (PID) control method. Once thermal stability is achieved, the screw (13) is driven by the motor (1), whose speed may be controlled by Pulse-Width Modulation, but depending on the motor, other speed control methods may be used.

The motor (1) is coupled to the screw (13) by means of a gearbox, which enables the rotation speed of the screw to be decreased or increased and, consequently, the torque to be increased or decreased, respectively. Upon turning, the screw (13) pushes the crushed thermoplastic in flakes that are previously washed and placed into the feed funnel (4). These flakes are obtained by crushing thermoplastic residues with the use of external shredders, which are not an integral part of the technology now described. These devices shred the thermoplastic up to the point at which their size enables a smooth extrusion process.

The action of pushing the plastic gives the screw (13) an axial reaction force in the opposite direction to this displacement, which is sustained by an axial bearing (2), and the load is distributed to the supporting base of the device, not enabling the screw to move in the opposite direction to the flow of the thermoplastic. The thermoplastic is pushed against the barrel (5) which is heated by the electrical heating resistors (6), resulting in the melting thereof. Arriving at the degassing zone (7) a sharp drop in pressure causes the polymer to bubble and release humidity, whereby eliminating the need for pre-drying and enhancing the quality of the product obtained. Subsequently, the melted thermoplastic is compressed against the die (8) leaving with a diameter equal to that of the hole, plus elastic expansion, hole that may have various diameters, affecting the speed of extrusion, traction and cooling of the filament. The larger the hole diameter and the greater the extrusion speed, the faster the speed of the puller (11) relative to the speed at which the thermoplastic is extruded by the device; the greater the flow, the lower the cooling efficiency. The filament is cooled on a cooling tray (9) so that the thermoplastic returns to solid state quickly, tray (9) that is constantly fed with water by a water circulation system (12) constituted of a water pump and a flow-limiting tap. This feeding induces the water to overflow of the smaller tray to the tray on which it rests, and from there back again to the water circulation system, whereby generating a constant water layer, thus increasing the contact between the water and the filament extruded, increasing the efficiency of the cooling due to convection. Lastly, after being cooled, the filament is pulled by a puller (11), which is only possible if the filament is already in solid state. The puller (11) is driven by a motor (15), which operates by rotation of the traction rollers (16), said rollers (16) having an adherent surface, which may be made of rubber material to increase adherence. These rollers (16) are pressed against each other by way of an elastic or spring placed on the plastic bearings (17) of the upper roller. The diameter of the filament is measured on the extrusion line, immediately prior to the puller (11) using a coupling with rollers (16), that pulls the filament through the measuring zone (14) which uses a digital calliper (18) and a spring or elastic to maintain the calliper (18) closed on the filament, whereby detecting a possible decrease in diameter.

The control of the device is made based on a microcontroller which acquires the temperature values measured by the sensors next to each of the electrical heating resistors (6) and adjusts the power of the electrical heating resistors (6) based on this information, using a control that can be by PID using solid state relays to switch on/off the electrical heating resistors (6) according to the temperature and programming by the microcontroller. The barrel (5) is finned in the feeding zone to prevent premature fusion of the flakes, which would cause the device to clog. Should the fins not dissipate the necessary heat, air or water cooling may be added to increase dissipation of the heat in the zone. The value measured by the filament diameter control unit is also acquired by the microcontroller, and based on this measurement, the speed of the motor (15) of the puller (11) is varied, thus varying the speed at which the filament is pulled by the puller (11) through the cooling zone, that is, the greater the speed at which the filament is pulled, the smaller the diameter of the filament and vice-versa. The measurement on the extrusion line is obtained by the microcontroller and thus the system has a feedback of the diameter, based on which the speed of the puller (11) is adjusted until it reaches a point at which it is within the parameters required for an FDM device.

In concrete terms, the operating method of the device for producing a filament comprises the following steps:
a) Introducing thermoplastic flakes into the hopper (4) after having reached the steady state in the temperature of the different heating zones of the screw (13);
b) Starting the motor (1) that drives the screw (13), it being connected to the screw (13) by a gearbox;
c) Upon turning the screw (13) compresses and pushes the flakes along the barrel (5) heated by the electrical heating resistors (6), resulting in the fusion of the thermoplastic;
d) Arriving at the degassing zone (7), a drastic drop in pressure caused by the arrangement of the screw (13) - the deepening channel means there is a greater volume for the same amount of thermoplastic, resulting in the "decompression" thereof and consequently contributes to lower the pressure in the zone - and by a vacuum plug (7) made from an orifice in the barrel (5) connected to a vacuum pump (3) causes the thermoplastic to bubble and consequently release volatile gases such as water vapour, which would diminish the quality of the filament;
e) The thermoplastic is compressed against the die (8) traversing the orifice thereof;
f) Once in the form of filament, but still in melted state, the thermoplastic is pulled by the puller, passing beforehand through a cooling tray (9) which upon forcing the filament to come into contact with water by virtue of a water circulation system (12) made it return to solid state, whereby enabling it to be grasped and pulled by the puller (11) ;
g) So that the diameter of the filament can be calibrated, it is measured next to the puller (11) and its diameter is sent to the microcontroller;
h) The microcontroller decides whether it has to maintain the speed of the motor (15) of the puller (11) to maintain the diameter of the filament, increase the speed of the motor (15) of the puller (11) to decrease the diameter of the filament, or lower the motor speed (15) of the puller (11) to increase the diameter;
i) The microcontroller also decides when the electrical heating resistors (6) are switched on during the operation of the proposed device, so that the temperature in each of the heated zones is pre-set. This is made by comparing the values measured by the temperature sensors (one for each of the electrical heating resistors) with the pre-set temperature values.

Naturally, the present specification is not in any way restricted to the embodiments presented in this document and a person with average skills in the field may envisage many possibilities of modifying it without straying from the general idea, as defined in the claims. The preferred embodiments described above are obviously combinable with one another. The following claims additionally define preferred embodiments.

## Claims

1. A device for producing a filament, comprising:
- a screw (13), driven by an motor (1), said screw having at least, two phases, comprising in a first phase a feeding zone where the thermoplastic material enters, a compression zone and a metering zone; and in a second phase a decompression zone, a degassing zone, a compression zone and a metering zone;
- said screw comprising a barrel (5) along its length;
- a die (8), situated at the end of the screw (13) opposite to the feeding zone;
**Characterized in that** comprises:
- at least one electrical heating resistor (6) installed on each of the said phases of the screw (13);
- a degassing system comprising a vacuum pump (3) connected to the barrel (5), in the degassing zone of the screw (13), causing a decrease in pressure;
- a cooling unit;
- a filament diameter control unit, comprising a diameter measuring mechanism (10), a puller (11) and respective motor (15);
- a microcontroller arranged to control:
i. the operating cycle of the electrical heating resistors (6), by processing the data sent by at least one temperature sensor installed next to each of the electrical heating resistors;
ii. the motor (1) for driving the screw (13); and
iii. control the speed of the motor (15) for operating the puller (11) of the diameter control unit, by processing the data sent by the diameter measuring mechanism (10).

2. The device according to claim 1, **characterized in that** the cooling unit comprises a cooling tray (9) and a water circulation system (12).

3. The device according to claims 1 or 2, **characterized in that** the diameter measuring mechanism is a digital calliper (18) .

4. The device according to claims 1 or 2, **characterized in that** the diameter measuring mechanism (10) is of a laser type.

5. The device according to any of the preceding claims, **characterized in that** the diameter control unit additionally comprises at least two traction rollers (16), disposed vertically, which are pressed against each other by an elastic placed on the plastic bearings (17) of the upper roller, and the movement of the traction rollers (16) is controlled by the motor (15) which acts on the lower roller (16).

6. The device according to any of the preceding claims, **characterized in that** the microcontroller controls the operating cycle of the electrical heating resistors (6) by the control algorithm in a Proportional-Integral-Derivative closed loop.

7. The device according to any of the preceding claims, **characterized in that** the microcontroller controls the motor (1) operation by pulse-width modulation.

8. The device according to any of the preceding claims, **characterized in that** the barrel (5) is finned at the feeding zone of the screw (13).

9. A method of operating the device for producing a filament of claims 1 to 8, **characterized in that** comprises the following steps:
a) microcontroller receives and processes the temperature data from the temperature sensors installed next to each of the electrical heating resistors (6), actuating until it reaches the steady state in the temperature of said zones;
b) microcontroller drives the motor (1) of the screw (13) which promotes the rotation of the screw (13) compressing and pushing the flakes of thermoplastic material at the feeding zone of the screw (13) along the barrel (5) heated by the electrical heating resistors (6), resulting in the fusion of the thermoplastic;
c) melted thermoplastic material arrives at the degassing zone, where the decrease in pressure caused by the arrangement of the screw (13) and by the connection to the vacuum plug (7) between the barrel (5) and the vacuum pump (3) causes the thermoplastic to bubble and consequently release volatile gases;
d) the thermoplastic is compressed against the die (8) traversing the orifice thereof;
e) in filament form but still in fused state, the thermoplastic traverses the cooling unit passing through the cooling tray (9) which upon forcing the filament to come into contact with water from the water circulation system (12), makes it return to solid state;
f) filament in solid state is pulled by the traction rollers (16) of the puller (11) of the diameter control unit;
g) calibration of the filament diameter, by the diameter measuring mechanism (10), which sends this data to the microcontroller;
h) the microcontroller processes the data sent by the diameter control unit and varies the motor (15) speed of the puller (11) to calibrate the filament diameter, increasing the motor (15) speed of the puller (11) to decrease the diameter of the filament, or lowering the motor (15) speed of the puller (11) to increase the diameter.

## Amended claims

### Amended claims under Art. 19.1 PCT

1. A device for producing a filament, comprising:
- a screw (13), driven by an motor (1), said screw having at least, two phases, comprising in a first phase a feeding zone where the thermoplastic material enters, a compression zone and a metering zone; and in a second phase a decompression zone, a degassing zone, a compression zone and a metering zone; the zones having different channel depths, the feeding and degassing zones having the deepest channel, the metering zones having a shallower channel and the remaining zones gradually vary the depth of the channel to join the bordering zones;
- said screw inserted in a barrel (5) along its length;
- a die (8), situated at the end of the screw (13) opposite to the feeding zone;
**Characterized in that** comprises:
- at least one electrical heating resistor (6) installed on each of the said phases of the screw (13);
- a degassing system comprising a vacuum pump (3) connected to the barrel (5) by means of a vacuum plug (7), in the degassing zone of the screw (13), causing a decrease in pressure;
- a cooling unit;
- a filament diameter control unit, comprising a diameter measuring mechanism (10), a puller (11) and respective motor (15);
- a microcontroller arranged to control:
i. the operating cycle of the electrical heating resistors (6), by processing the data sent by at least one temperature sensor installed next to each of the electrical heating resistors;
ii. the motor (1) for driving the screw (13); and
iii. control the speed of the motor (15) for operating the puller (11) of the diameter control unit, by processing the data sent by the diameter measuring mechanism (10).

2. The device according to claim 1, **characterized in that** the cooling unit comprises a cooling tray (9) and a water circulation system (12).

3. The device according to claims 1 or 2, **characterized in that** the diameter measuring mechanism is a digital calliper (18) .

4. The device according to claims 1 or 2, **characterized in that** the diameter measuring mechanism (10) is of a laser type.

5. The device according to any of the preceding claims, **characterized in that** the diameter control unit additionally comprises at least two traction rollers (16), disposed vertically, which are pressed against each other by an elastic placed on plastic bearings (17) of the upper roller, and the movement of the traction rollers (16) is controlled by the motor (15) which acts on the lower roller (16).

6. The device according to any of the preceding claims, **characterized in that** the microcontroller controls the operating cycle of the electrical heating resistors (6) by the control algorithm in a Proportional-Integral-Derivative closed loop.

7. The device according to any of the preceding claims, **characterized in that** the microcontroller controls the motor (1) operation by pulse-width modulation.

8. The device according to any of the preceding claims, **characterized in that** the barrel (5) is finned at the feeding zone of the screw (13).

9. A method of operating the device for producing a filament of claims 1 to 8, **characterized in that** comprises the following steps:
a) microcontroller receives and processes the temperature data from the temperature sensors installed next to each of the electrical heating resistors (6), actuating until it reaches the steady state in the temperature of said zones;
b) microcontroller drives the motor (1) of the screw (13) which promotes the rotation of the screw (13) compressing and pushing the flakes of thermoplastic material at the feeding zone of the screw (13) along the barrel (5) heated by the electrical heating resistors (6), resulting in the fusion of the thermoplastic;
c) melted thermoplastic material arrives at the degassing zone, where the decrease in pressure caused by the arrangement of the screw (13) and by the connection to the vacuum plug (7) between the barrel (5) and the vacuum pump (3) causes the thermoplastic to bubble and consequently release volatile gases;
d) the thermoplastic is compressed against the die (8) traversing the orifice thereof;
e) in filament form but still in fused state, the thermoplastic traverses the cooling unit making it return to solid state;
f) filament in solid state is pulled by the traction rollers (16) of the puller (11) of the diameter control unit;
g) calibration of the filament diameter, by the diameter measuring mechanism (10), which sends this data to the microcontroller;
h) the microcontroller processes the data sent by the diameter control unit and varies the motor (15) speed of the puller (11) to calibrate the filament diameter, increasing the motor (15) speed of the puller (11) to decrease the diameter of the filament, or lowering the motor (15) speed of the puller (11) to increase the diameter.

10. Method according to claim 9, wherein in the cooling unit, the thermoplastic passes through a cooling tray (9) and through a water circulation system (12).
